# NEUE EUROPÄISCHE PATENTSCHRIFT

(11) **EP 1 973 209 B2**
(45) Veröffentlichungstag und Bekanntmachung des Hinweises auf die Entscheidung über den Einspruch: **04.06.2014**
(45) Hinweis auf die Patenterteilung: 25.01.2012
(21) Anmeldenummer: 07005979.5
(22) Anmeldetag: 22.03.2007
(51) Int. Cl.: H02G 3/04

(54) **Vorrichtung zur Medienversorgung**
Device for supplying media
Dispositif destiné à l'alimentation de milieu

(43) Veröffentlichungstag der Anmeldung: 24.09.2008
(73) Patentinhaber: Waldner Labor- und Schuleinrichtungen GmbH, 01097 Dresden (DE)
(72) Erfinder: Keibach, Dieter, 88267 Vogt (DE)
(74) Vertreter: Kotitschke & Heurung Partnerschaft mbB

(56) Entgegenhaltungen:
- EP-A- 0 232 212
- EP-A- 1 793 463
- WO-A-03/069748
- DE-A1- 3 502 829
- DE-A1- 10 314 685
- DE-U1- 9 014 395
- DE-U1- 20 206 194
- DE-U1- 20 305 002
- DE-U1-202005 003 257

## Beschreibung

Die Erfindung betrifft eine Vorrichtung zur Medienversorgung einer oder mehrerer Arbeitsräume mit Medienleitungen, die mit Abgriffen für die Arbeitsräume versehen sind.

Vorrichtungen dieser Art sind an sich bekannt und in verschiedenen Ausführungsformen auf dem Markt erhältlich.

In DE 103 14 685 A1 ist ein Medien versorgungssystem beschrieben, das einem aus Teilstücken zusammensetzbaren Kanal zur Aufnahme von Versorgungsleitungen und/order Datenleitungen umfasst.

Die bekannten Vorrichtungen sind jedoch mit Nachteilen behaftet, die insbesondere darin zu sehen sind, dass sie jeweils auf ihre maximale Medienbestückung ausgelegt sind und es daher nicht möglich ist, sie bedarfsgerecht so zu gestalten, dass sie den jeweiligen individuellen Anforderungen genügen, die an die zu versorgenden Arbeitsplätze gestellt sind. Ebenso sind die vorgenannten Ausgestaltungen nicht dazu geeignet, eine Medientrassenführung zur Versorgung mehrerer Räume zu realisieren. Da das nicht möglich ist, sind Anschaffungen bekannter Vorrichtungen mit hohen Investitionskosten verbunden, die nicht unbedingt nötigt wären, wenn eine Auslegung mit einer niedrigeren Medienbestückung ausreichend ist.

Die bekannten Vorrichtungen haben weiterhin den Nachteil, dass ihre Aufrüstung und Nachrüstung nur begrenzt möglich sind und sie daher nicht an steigende Anforderungen an die Medienversorgung der Arbeitsplätze angepasst werden können.

Die der Erfindung zugrunde liegende Aufgabe besteht daher darin, eine Vorrichtung der eingangs genannten Art zu schaffen, die bedarfsgerecht nach den Erfordernissen der zu versorgenden Arbeitsplätze gestaltet werden kann.

Die erfindungsgemäße Vorrichtung soll weiterhin insbesondere eine Medientrassenführung über mehrere Räume ermöglichen.

Diese Aufgabe wird gemäß der Erfindung durch die Vorrichtung gelöst, die im Patentanspruch 1 angegeben ist.

Besonders bevorzugte Weiterbildungen und Ausgestaltungen der erfindungsgemäßen Vorrichtung sind Gegenstand der Patentansprüche 2 bis 17.

Die erfindungsgemäße Vorrichtung bietet aufgrund ihres modularen Aufbaus die Möglichkeit der Ausgestaltung in bedarfsgerechter Form und kann auch nach der Installation ohne größere Umbauarbeiten aufgerüstet werden. Dabei können bereits installierte Komponenten nachher wieder eingesetzt werden.

Die Vorrichtung ist für alle benötigten Medien offen und eignet sich zur Trassenführung von Medien sowie daneben auch zur Medienentnahme.

Im Folgenden werden anhand der zugehörigen Zeichnung besonders bevorzugte Ausführungsbeispiele der erfindungsgemäßen Vorrichtung sowie die jeweils dabei erzielten Vorteile und technischen Effekte im Einzelnen beschrieben.

Es zeigen
Fig. 1 eine Explosionsdarstellung eines ersten Ausführungsbeispiels der erfindungsgemäßen Vorrichtung,
Fig. 2 eine Querschnittsansicht der Basiskomponente des in Fig. 1 dargestellten Ausführungsbeispiels,
Fig. 3 eine Querschnittsansicht der Basiskomponente mit angebauter Medientrassenführung, (nicht gemäß der Erfindung)
Fig. 4 eine Querschnittsansicht der Basiskomponente mit beidseitig angeordneten Anbauleuchten, (nicht gemäß der Erfindung)
Fig. 5 eine Querschnittsansicht der Basiskomponente sowohl mit Medientrassenführung als auch beidseitig angeordneten Anbauleuchten, (nicht gemäß der Erfindung)
Fig. 6 eine Querschnittsansicht der Basiskomponente mit beidseitig vorgesehenen Anbaukanälen, (nicht gemäß der Erfindung)
Fig. 7 eine Querschnittsansicht der Basiskomponente sowohl mit beidseitig angeordneten Anbaukanälen als auch beidseitig angeordneten Anbauleuchten, (nicht gemäß der Erfindung)
Fig. 8 eine Querschnittsansicht der Basiskomponente sowohl mit beidseitig angeordneten Anbaukanälen, beidseitig angeordneten Anbauleuchten und integrierter Medientrassenführung, (nicht gemäß der Erfindung)
Fig. 9 eine Querschnittsansicht eines Anbaukanals für die Basiskomponente mit integrierter Medienleitungsinstallation,
Fig. 10 eine Vorrichtung zur Installation an einer Wand oder zum Anbau an einer Medienzelle, (nicht gemäß der Erfindung)
Fig. 11 eine Querschnittsansicht einer Vorrichtung aus zwei Medienkanälen als reine Medientrassenführung,
Fig. 12 die in Fig. 11 dargestellte Vorrichtung mit beidseitig angebrachten Beleuchtungselementen,
Fig. 13 eine Draufsicht auf mehrere hintereinander liegende Arbeitsräume,
Fig. 14 eine Querschnittsansicht eines Arbeitsraumes mit abgehängter Decke,
Fig. 15 eine Querschnittsansicht eines Arbeitsraumes mit Doppelboden und abgehängter Decke und
Fig. 16 eine Querschnittsansicht eines Arbeitsraumes mit an der Rohdecke installierten Raumab- und zuluftleitungen und in der Medienversorgung installierten Elektro-, Sanitär- und Versorgungsleitungen.

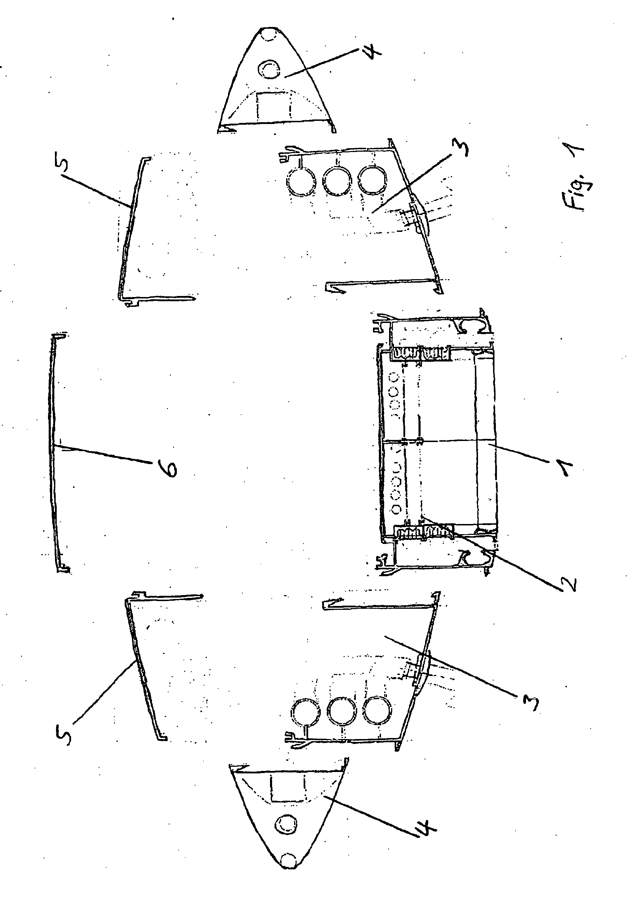

Das in Fig. 1 dargestellte Ausführungsbeispiel der erfindungsgemäßen Vorrichtung zur Medienversorgung der Arbeitsplätze eines Arbeitsraumes, in denen sich Arbeitsplätze befinden, die mit Medien, beispielsweise elektrischem Strom oder flüssigen Medien zu versorgen sind, ist in der dargestellten Weise modular aufgebaut und besteht somit aus einzelnen Komponenten 1, 2, 3, 4, 5 und 6, die so ausgebildet sind, dass sie nach Bedarf, insbesondere ohne den Einsatz von Werkzeugen zusammengesetzt werden können.

Das in Fig. 1 dargestellte Ausführungsbeispiel umfasst insbesondere die folgenden Komponenten:
- eine Basiskomponente 2, die in Form eines Kanals, d. h. umgedreht U-förmig ausgebildet ist und an ihrer Unterseite eine Medienblende 1 trägt,
- einen Anbaukanal 3, der als Installationskanal mit integrierter Leitungsführung und Abgriffen zur Medienabnahme zu den Arbeitsplätzen und/oder als Entlüftungskanal ausgebildet ist,
- eine Anbauleuchte 4,
- eine Abdeckung 5 des Anbaukanals 3 und
- eine Abdeckung 6.

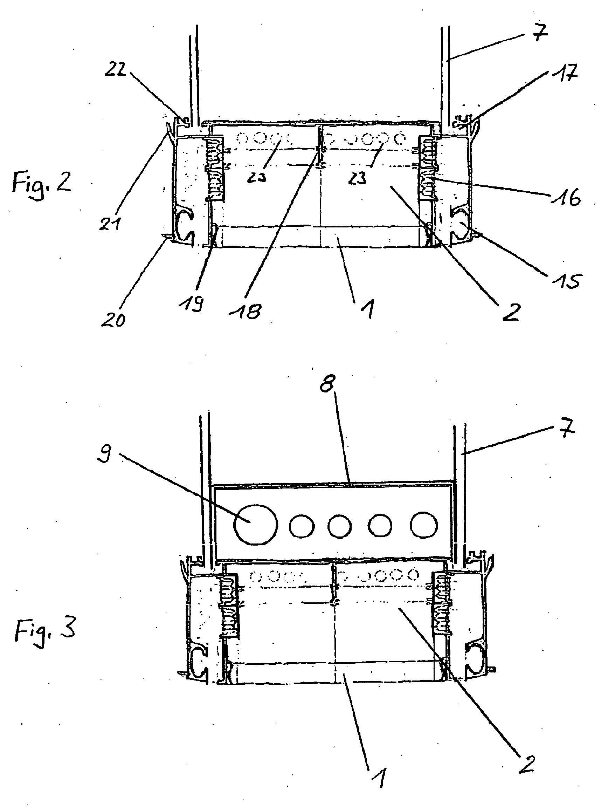

Fig. 2 zeigt in einer Querschnittsansicht die Basiskomponente 2, die in Fig. 1 dargestellt ist, mehr im Einzelnen.

Wie es in Fig. 2 dargestellt ist, ist die Basiskomponente 2 mit Klemmeinrichtungen 19 zum Halten der Medienblende 1, Stromführungen 23 z. B. Hochvoltleitungen und Telematikleitungen, einem Trennsteg 18 zum Unterteilen der Stromführungen 23 nach den geführten Stromarten, einem Schnappverschluss 20 zum Anbau weiterer Komponenten, einer Einhängevorrichtung 21 für die weiteren Komponenten, Aufnahmenuten 22 für Abdeckungen und einer Aufnahme 16 für Stromschienen versehen.

In Fig. 2 ist gleichfalls dargestellt, dass die Basiskomponente 2 an einer Aufhängevorrichtung an der Raumdecke aufgehängt sein kann, die an ihrem freien Ende in einer C-Schiene 17 an der Basiskomponente aufgenommen ist.

Eine Rollenführungsnut 15 ist an der Basiskomponente 2 zur Aufnahme von horizontal verschiebbaren Ablageebenen oder Entnahmeebenen vorgesehen. Die Ablage- oder Entnahmeebenen tragen Medienführungen, die z. B. über die Stromschiene in der Aufnahme 16 versorgt werden.

Wie es in Fig. 3 dargestellt ist, können an der Basiskomponente 2 Grundleitungen 9 als Trassenführungen für verschiedene Medien vorgesehen sein, die mit einer Abdeckung 8 versehen sind.

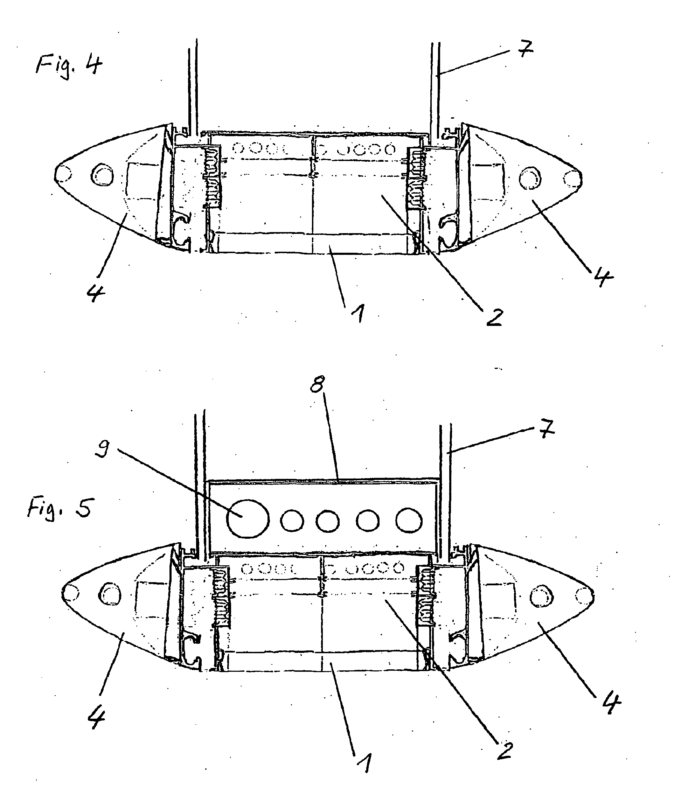

Fig. 4 zeigt die Basiskomponente 2 mit zwei Anbauelementen, nämlich zwei Anbauleuchten 4, die auf beiden Seiten der Basiskomponente 2 angebracht sind.

Fig. 5 zeigt eine Kombination der Vorrichtungen von Fig. 3 und 4, die sowohl Grundleitungen 9 als auch Anbauleuchten 4 umfasst.

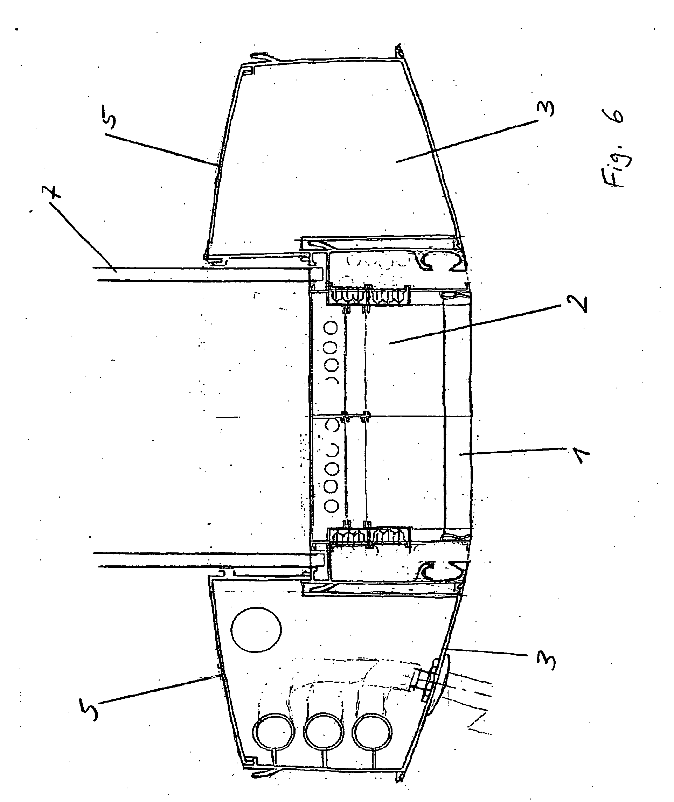

Bei dem in Fig. 6 dargestellten Beispiel sind an der Basiskomponente 2 beidseitig Anbaukanäle 3 vorgesehen, die mit Abdeckungen 5 jeweils abgedeckt sind.

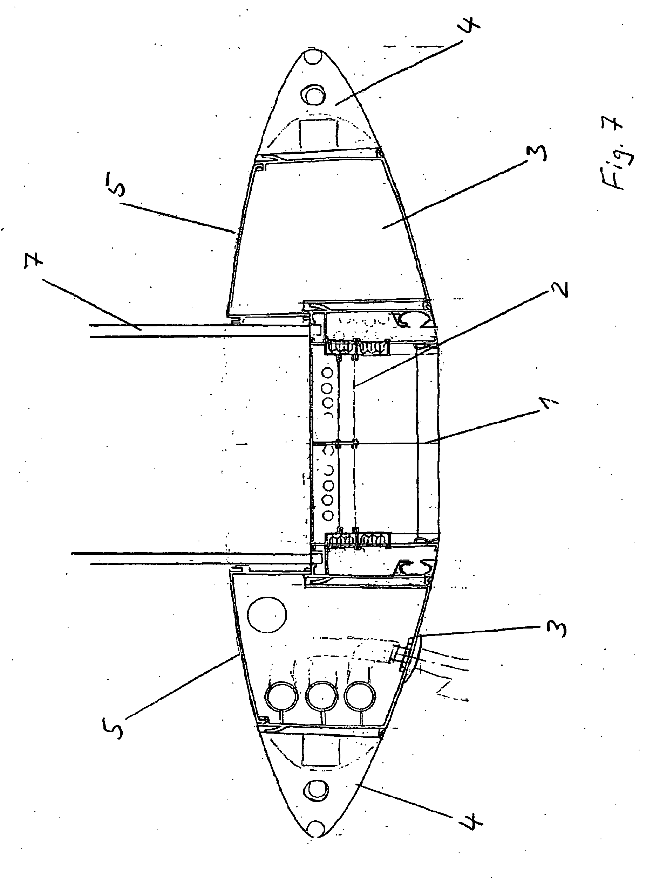

Fig. 7 zeigt ein Beispiel, bei dem am Grundelement 2 beidseitig Anbaukanäle 3 sowie daran beidseitig Anbauleuchten 4 vorgesehen sind, wobei die Anbaukanäle 3 durch Abdeckungen 5 jeweils abgedeckt sind.

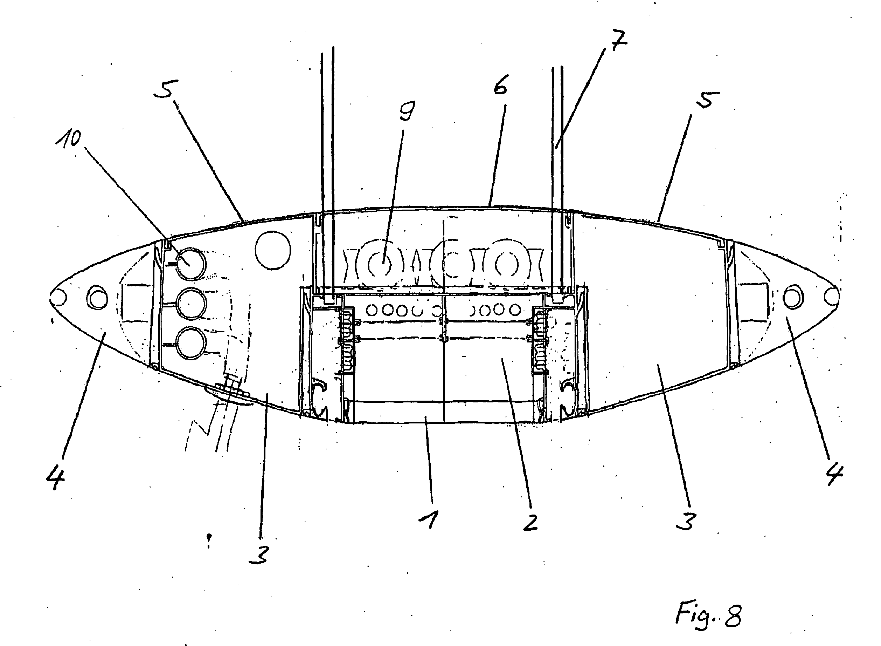

Fig. 8 zeigt ein erweitertes Beispiel, bei dem neben den in Fig. 7 dargestellten Komponenten auch Grundleitungen 9 für die Medienversorgung vorgesehen sind, die mit einer Abdeckung 6 abgedeckt sind.

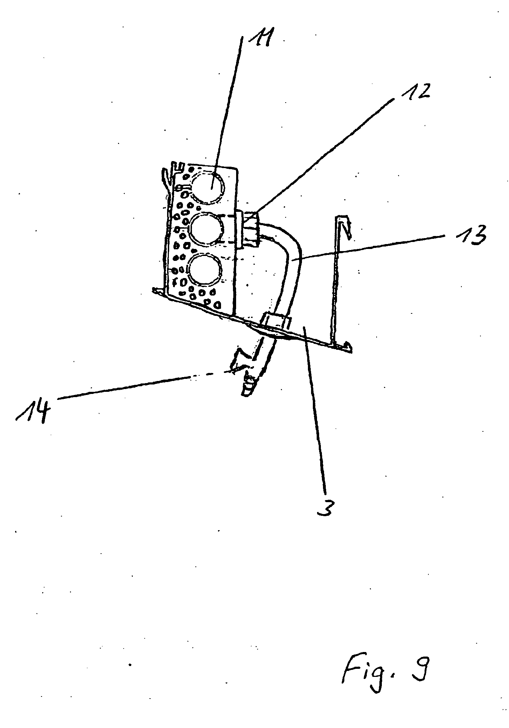

Fig. 9 zeigt im Einzelnen eine im Anbaukanal integrierte Medienleitung 11 sowie die Installationsleitungen 10, die im Anbaukanal 3 integriert sind. Eine Einschraubvorrichtung 12 dient zum Anschluss der Entnahmestellen 14, die über eine flexible Verbindungsleitung 13 mit den Installationsleitungen 10 verbunden sind.

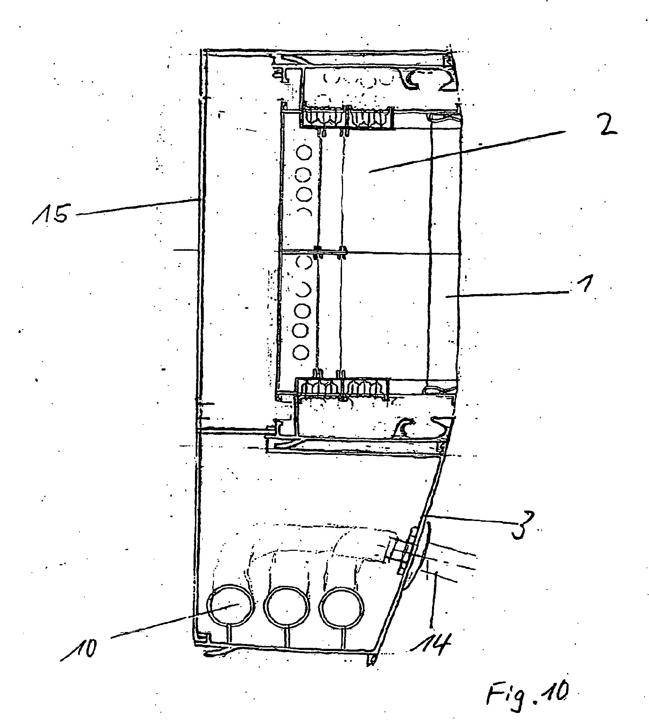

Die in Fig. 10 dargestellte Vorrichtung entspricht in seinem Aufbau dem in Fig. 6 dargestellten Ausführungsbeispiel und besteht somit aus einer Basiskomponente 2 und einem Anbaukanal 3 mit Installationsleitungen 10, die zu Entnahmestellen 14 führen, wobei im Gegensatz zu dem in Fig. 6 dargestellten Ausführungsbeispiel nicht an einer Raumdecke abgehängt ist, sondern so ausgestaltet ist, dass es an einer Wand oder an einer Medienzelle montiert werden kann. Hierzu sind Montageschienen 15 an der Basiskomponente 2 sowie am Anbaukanal 3 jeweils vorgesehen.

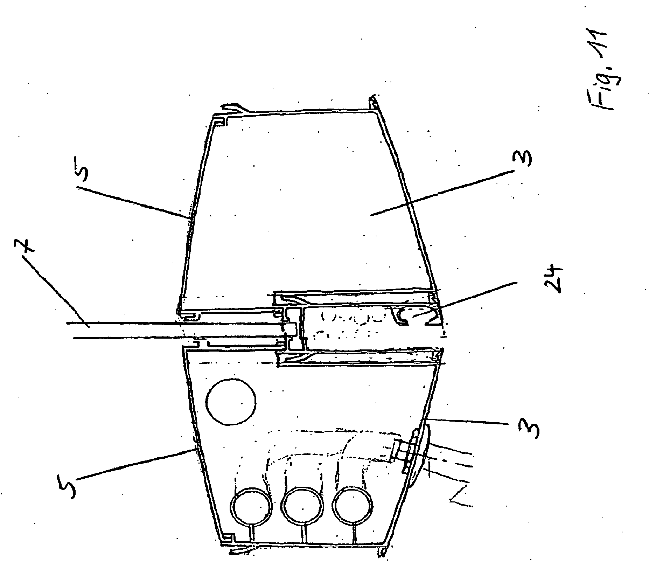

Fig. 11 zeigt schließlich eine Vorrichtung die aus zwei Medienkanälen 3 gebildet ist, die mit den Anbaukanälen 3 identisch sind und mit Abdeckungen 5 abgedeckt sind. Die Vorrichtung ist über eine Abhängevorrichtung 7 an der Raumdecke abgehängt.

An einem der Medienkanäle ist eine Aufnahme 24 zum Aufnehmen der Abhängevorrichtung 7 integriert. Eine horizontale Führungsnut dient zur Aufnahme einer zusätzlichen Ablageebene.

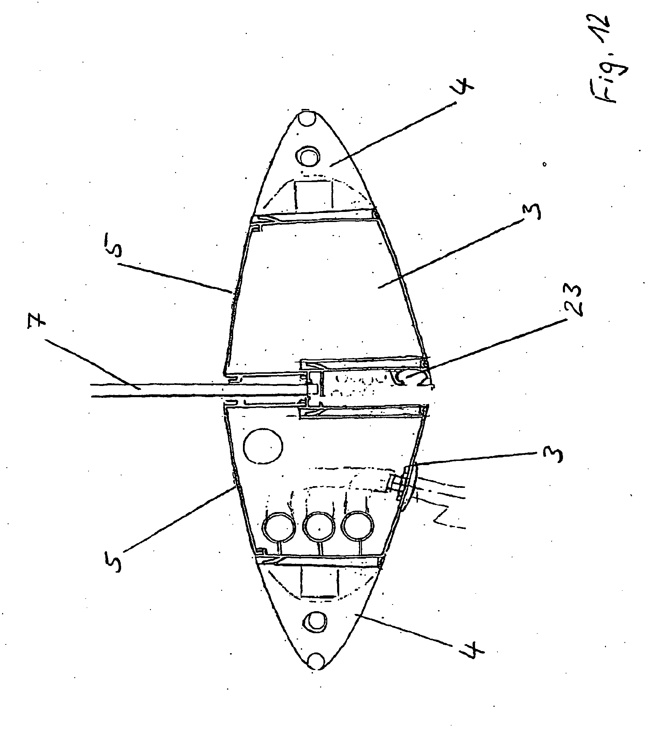

Fig. 12 zeigt schließlich die in Fig. 11 dargestellte Vorrichtung mit zusätzlich beidseitig vorgesehenen Anbauleuchten 4.

Bei allen oben beschriebenen Ausführungsbeispielen der Erfindung können die Sanitärinstallationen, d. h. die Versorgungen mit flüssigen Medien über handelsübliche Einrichtungen erfolgen. Die Elektroinstallationen sind insbesondere in einem spritzwassergeschützten Kanal (mindestens IP44) angeordnet.

Die an der Grundkomponente 2 vorgesehenen Installationen umfassen elektrische Verbraucher wie beispielsweise Normalstrom von 230 V, Starkstrom von 400 V, Niedervoltstrom mit verschiedenen Spannungen, ein EDV-Netz, einen Computer, der in der Basiskomponente 2 integriert ist, Lautsprecher, die in der Basiskomponente 2 integriert sind und passiv oder aktiv sein können, Verstärkereinrichtungen für die Tonwidergabe, Aufnahmeeinrichtungen für Hotspots für Wireless-Verbindungen, Aufnahmeeinrichtungen von Sensoren zur Beleuchtungssteuerung, Aufnahmeeinrichtungen von Steuerungselementen aller Art, Halterungen der Laufschienen für die zweite Abnahme- und Ablageebene, die horizontal verschiebbar ist, Vorhaltungen zum Aufnehmen der Stromschienen, Vorhaltungen zum Aufnehmen der Trassenführungen von flüssigen und gasförmigen Medien, Trennungen zwischen den elektrischen Leitungen und den Datenleitungen, die Anbauinstallationen für die Beleuchtungskörper, die Anbauinstallationen für die Anbaukanäle und Aufnahmen zum werkzeuglosen Anbau von verbraucherbestückten Panelen.

Die Anbaukanäle eignen sich für die Leitungsführung von wässrigen Medien und gasförmigen Medien, haben Aufnahmen für Entnahmestellen, können die Abluft führen, nehmen Raumabluftanschlussstellen und Abluftanschlussstellen für mobile Abzüge als Arbeitsplätze im Raum auf, bieten Aufnahmemöglichkeiten von Schnüffelessen-Anschlussstellen, sind mit Einrichtungen zum Anbau von Beleuchtungskörpern versehen, sind so ausgestaltet, dass sie an der Basiskomponente 2 ohne Werkzeug anbaubar sind, und können werkseitig vorinstalliert werden.

Die Anbaukanäle 3 sind mit darin geführten als Strangpressprofil gezogenen Installationsleitungen 10 für wässrige und gasförmige Medien versehen.

Die erfindungsgemäße Vorrichtung kann zur Medienversorgung beliebiger Arbeitsräume, insbesondere Unterrichtsräume verwandt werden.

Wenn in derartigen Räumen bestimmte Medien wie beispielsweise elektrischer Strom, EDV-Anschlüsse, Beleuchtungsanschlüsse sowie Wasser- und Abwasseranschlüsse benötigt werden, können diese Medien über die trassenförmig geführten Grundleitungen 9 und/oder ggf. die Installationsleitungen 10 zugeführt werden, wobei die Medienabnahme beispielsweise über einen Wandschrank in jedem Arbeitsraum erfolgt. Die Grundleitungen 9 sowie die Installationsleitungen 10 haben dann je nach Abnahmestellenanzahl die dadurch bedingten entsprechenden Querschnitte.

Wenn nur ein Raum zu versorgen ist, erfolgen die Medienführung und die Abnahme der Medien nur in den Anbaukanälen 3. Die hier installierten Installationsleitungen 10 und die Medienleitungen 11 sind entweder mit den Grundleitungen 9 oder mit Hauptversorgungsleitungen an der Gebäudeseite verbunden. Die Installationsleitungen 10 im Anbaukanal 3 sind dabei standardisierte konventionell installierte Medienleitungen, während die Medienleitungen 11 im Anbaukanal 3 bei der Fertigung, d. h. beim Ziehen oder Extrudieren des Kanals aus Aluminium eingebrachte Leitungen sind. Das bietet den Vorteil, dass zusätzliche Leitungen aus Kupfer oder Kunststoff nicht separat installiert werden müssen, so dass sich hierdurch eine Kostenverringerung ergibt.

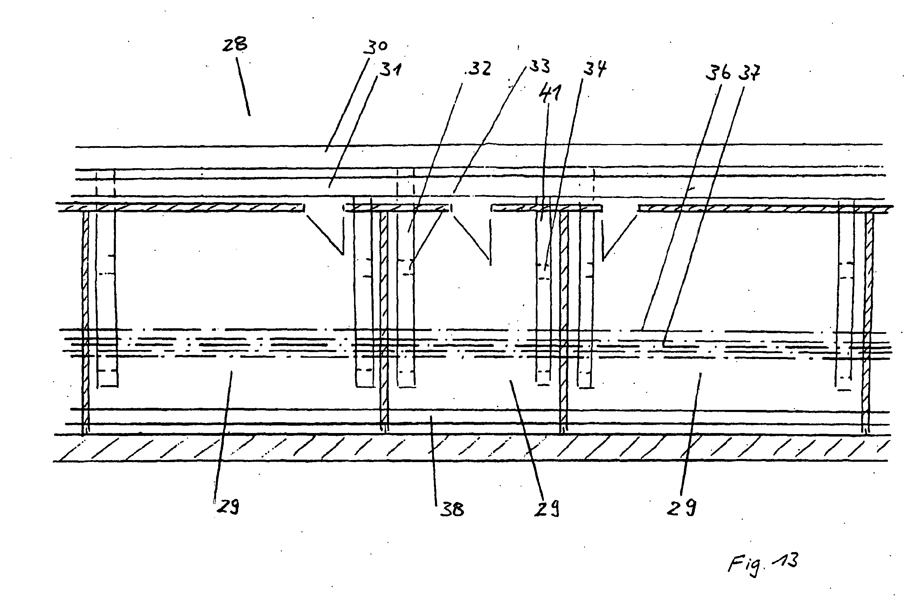

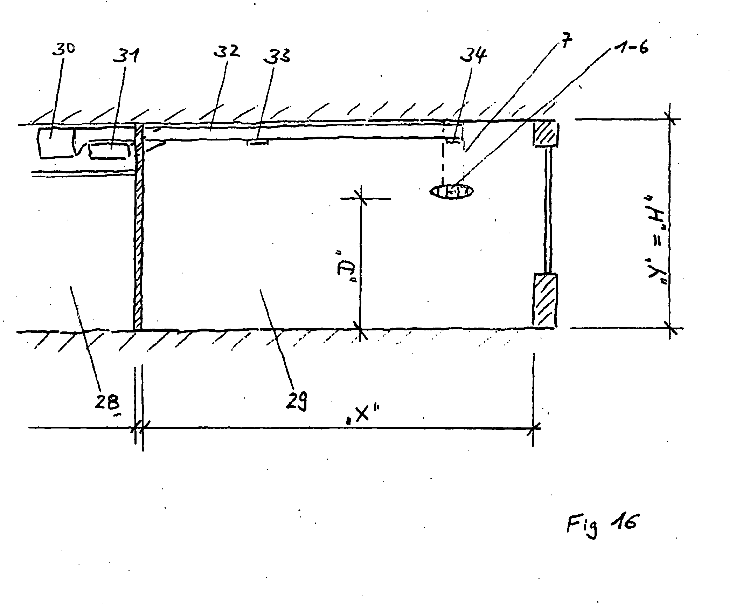

Die oben beschriebene Leitungsführung ist im Einzelnen in den Fig. 13 bis 16 dargestellt.

Fig. 13 zeigt eine Draufsicht auf mehrere Arbeitsräume, insbesondere Labor- oder Unterrichtsräume, die hintereinander liegen. An einem Gebäudeflur 28 liegen die Unterrichts- und Laborräume 29. Ein Abluftsammelkanal 30, ein Zulufthauptverteilerkanal 31, eine Deckenansaugung der Abluftanlage 33 und Elektroinstallationsleitungen 38 sind parallel zum Flur an den Unterrichts- und Laborräumen 29 entlang verlegt. Ein Abluftstichkanal 32 führt vom Abluftsammelkanal 30 in jeden Unterrichts- und Laborraum. Ein Zuluftstichkanal 41 führt vom Zulufthauptverteilerkanal 31 in jeden Unterrichts- oder Laborraum. Der Zuluftstichkanal 41 weist einen Zuluftdeckenauslass 34 auf.

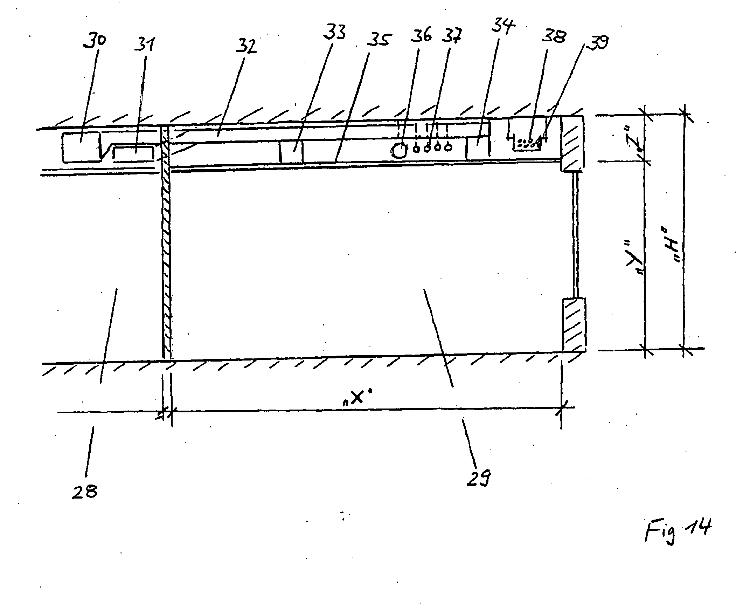

Die Installationsleitungen sind über eine abgehängte Decke 35 (Fig. 14) verkleidet.

Wie es in Fig. 13 weiterhin dargestellt ist, ist eine Abwasserentsorgungsleitung 36 und sind Medienversorgungsleitungen 37 durch die Unterrichts- und Laborräume verlegt.

In Fig. 14 sind weiterhin Kabelbrücken 39 für die Elektroinstallationsleitungen 38 dargestellt.

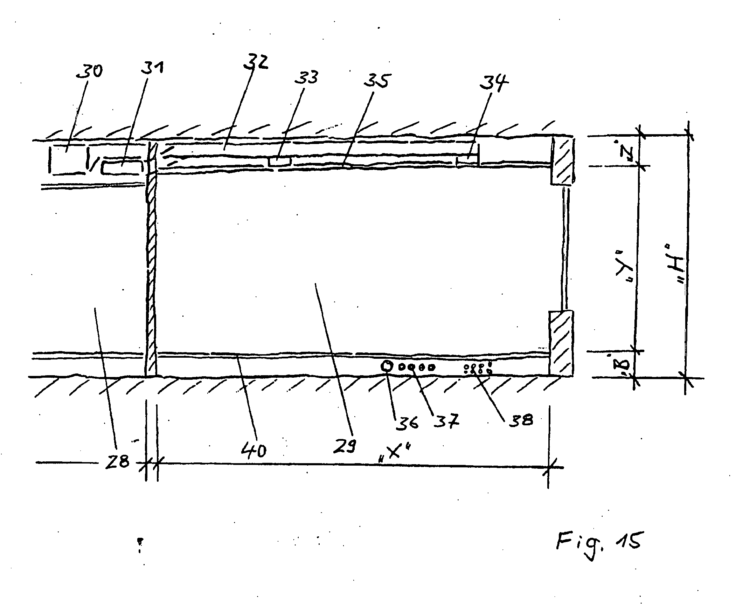

Fig. 15 zeigt einen Doppelboden 40 mit Medienversorgungsleitungen und Elektroinstallationsleitungen. Mit X, Y und Z sind die Raumbreite, die fertige Lichtraumhöhe und der Deckenhohlraum zwischen der abgehängten Decke und der Rohdecke zur Installationsausführung bezeichnet. B bezeichnet den Bodenhohlraum zwischen Rohboden und Doppelboden und H bezeichnet die erforderliche Rohbauhöhe.

Die erfindungsgemäße Vorrichtung kann aufgrund ihres modularen Aufbaus vom Fachmann ohne Weiteres so zusammengesetzt werden, wie es dem jeweils herrschenden Bedarf entspricht. Sie kann bei steigendem Bedarf nachgerüstet werden, wobei diese Nachrüstung auch nach der Installation einer geringer ausgelegten Vorrichtung durch Zurüstung weiterer Komponenten möglich ist. Diese Nachrüstung kann ohne Einsatz von Werkzeugen erfolgen.

Die erfindungsgemäße Vorrichtung kann weiterhin als Installationstrassenführung verwandt werden, wodurch die Rohbauhöhen um das Maß Z + B in Fig. 14 und 15 gegenüber den bei herkömmlicher Bauweise notwendigen Installationsräumen verringert werden kann, was zu der erwähnten Kostenreduktion beiträgt.

## Patentansprüche

1. Vorrichtung zur Medienversorgung eines oder mehrerer Arbeitsräume (29) mit Medienleitungen, die mit Abgriffen für die Arbeitsräume (29) versehen sind, wobei die Vorrichtung einen modularen Aufbau aus einzelnen Komponenten aufweist, die so ausgestaltet sind, dass sie nach Bedarf zusammengesetzt werden können, **dadurch gekennzeichnet, dass** die Vorrichtung Anbaukanäle (3) aufweist, die als Installationskanal und/oder Abluftkanal ausgestaltet sind, die für gasförmige und wässrige Medien vorgesehen sind, wobei in den Anbaukanälen (3) Installationsleitungen (10) für gasförmige und wässrige Medien vorgesehen sind.

2. Vorrichtung nach Anspruch 1, **dadurch gekennzeichnet, dass** die einzelnen Komponenten so gestattet sind, dass sie ohne Einsatz von Werkzeugen zusammengesetzt werden können.

3. Vorrichtung nach Anspruch 1 oder 2, **gekennzeichnet durch** eine Basiskomponente, an der weitere Komponenten angebaut werden können.

4. Vorrichtung nach Anspruch 3, **dadurch gekennzeichnet, dass** die Basiskomponente eine kanalartige Ausbildung hat.

5. Vorrichtung nach Anspruch 3, **dadurch gekennzeichnet, dass** in der Basiskomponente elektrische Versorgungsleitungen verlegt sind.

6. Vorrichtung nach Anspruch 3, **gekennzeichnet durch** Aufnahmeeinrichtungen für Stromschienen.

7. Vorrichtung nach Anspruch 5, **gekennzeichnet durch** Trennstege zur Trennung verschiedener elektrischer Versorgungsleitungen.

8. Vorrichtung nach Anspruch 3, **gekennzeichnet durch** Rollenführungsnuten zur Aufnahme von horizontal verschiebbaren Ablageebenen.

9. Vorrichtung nach Anspruch 3, **gekennzeichnet durch** Einrichtungen zur Aufnahme der weiteren Anbaukomponenten.

10. Vorrichtung nach Anspruch 3, **dadurch gekennzeichnet, dass** die Basiskomponente mit Einrichtungen zum Aufnehmen von Abhängevorrichtungen zum Abhängen der Vorrichtung an einer Raumdecke ausgestattet ist.

11. Vorrichtung nach Anspruch 3, **dadurch gekennzeichnet, dass** die Anbaukanäle, die als Installations- und/oder Abluftkanal ausgebildet sind, an der Basiskomponente angebaut werden können.

12. Vorrichtung nach Anspruch 3, **gekennzeichnet durch** eine Trassenführung mit Grundleitungen zur Medienversorgung, die an der Basiskomponente angeordnet werden kann.

13. Vorrichtung nach einem der vorhergehenden Ansprüche, **gekennzeichnet durch** eine Anbaukomponente, in der Beleuchtungselemente aufgenommen sind.

14. Vorrichtung nach einem der vorhergehenden Ansprüche, **dadurch gekennzeichnet, dass** sie zur Anordnung an einer Raumwand oder einer Medienzelle ausgestaltet ist.

15. Vorrichtung nach einem der vorhergehenden Ansprüche, **dadurch gekennzeichnet, dass** sie aus wenigstens einem kanalartigen Bauelement besteht, in dem sich eine Medienleitungstrassenführung befindet.

16. Vorrichtung nach einem der vorhergehenden Ansprüche, **dadurch gekennzeichnet, dass** sie auf die Anforderungen eines Arbeitsraumes ausgelegt ist.

17. Vorrichtung nach einem der Ansprüche 1 bis 15, **dadurch gekennzeichnet, dass** sie so bemessen ist, dass sie über mehrere Räume führt.

## Claims

1. Device for supplying media to one or more working chambers (29) having media lines which are provided with taps for the working chambers (29), wherein the device has a modular construction consisting of individual components which are designed such that they can be assembled together as required, **characterized in that** the device comprises attachment channels (3) which are designed as installation channels and/or air exhaust conduits (30) which are provided for gaseous and aqueous media, wherein installation lines (10) for gaseous and aqueous media are provided within the attachment channels (3)..

2. Device as claimed in claim 1, **characterized in that** the individual components are configured in such a manner that they can be assembled together without the use of tools.

3. Device as claimed in claim 1 or 2, **characterized by** a base component to which further components can be attached.

4. Device as claimed in claim 3, **characterized in that** the base component has a channel-like formation.

5. Device as claimed in claim 3, **characterized in that** electrical supply lines are installed in the base component.

6. Device as claimed in claim 3, **characterized by** receiving devices for power rails.

7. Device as claimed in claim 5, **characterized by** separating webs for separating various electrical supply lines.

8. Device as claimed in claim 3, **characterized by** roller guide grooves for receiving horizontally displaceable storage levels.

9. Device as claimed in claim 3, **characterized by** devices for receiving the further attachment components.

10. Device as claimed in claim 3, **characterized in that** the base component is equipped with devices for receiving hanging devices for hanging the device from a ceiling.

11. Device as claimed in claim 3, **characterized in that** the attachment channels which are formed as installation channels and/or air exhaust conduits can be attached to the base component.

12. Device as claimed in claim 3, **characterized by** an alignment profile having base lines for the supply of media, which can be disposed on the base component.,

13. Device as claimed in any one of the preceding claims, **characterized by** an attachment component, in which lighting elements are received.

14. Device as claimed in any one of the preceding claims, **characterized in that** it is designed to be disposed on the wall of a room or a media cell.

15. Device as claimed in any one of the preceding claims, **characterized in that** it consists of at least one channel-like component, in which a media line alignment profile is located.

16. Device as claimed in any one of the preceding claims, **characterized in that** it is designed to meet the requirements of a workspace.

17. Device as claimed in any one of claims 1 to 15, **characterized in that** it is dimensioned such that it extends over several rooms.

## Revendications

1. Dispositif destiné à l'alimentation en fluide d'une ou plusieurs chambres de travail (29), avec des conduites de fluide qui sont pourvues de branchements pour les chambres de travail (29), le dispositif présentant une structure modulaire constituée de composants individuels qui sont conçus de telle sorte qu'ils peuvent être réunis en fonction des besoins, **caractérisé en ce que** le dispositif présente des canaux rapportés (3), qui sont réalisés sous forme de canal d'installation (10) et/ou de canal d'air sortant, qui sont prévus pour des fluides gazeux et aqueux, des conduites d'installation (10) destinées à des fluides gazeux et aqueux étant prévues dans les canaux rapportés (3).

2. Dispositif selon la revendication 1, **caractérisé en ce que** les composants individuels sont conçus de telle sorte qu'ils peuvent être réunis sans utiliser d'outils.

3. Dispositif selon la revendication 1 ou 2, **caractérisé par** un composant de base, auquel d'autres composants peuvent être rapportés.

4. Dispositif selon la revendication 3, **caractérisé en ce que** le composant de base possède une configuration du type canal.

5. Dispositif selon la revendication 3, **caractérisé en ce que** des lignes d'alimentation électrique sont posées dans le composant de base.

6. Dispositif selon la revendication 3, **caractérisé par** des moyens récepteurs pour des rails conducteurs.

7. Dispositif selon la revendication 5, **caractérisé par** des nervures de séparation pour séparer différentes lignes d'alimentation électrique.

8. Dispositif selon la revendication 3, **caractérisé par** des rainures de guidage à galets pour recevoir des plans de dépose horizontalement mobiles.

9. Dispositif selon la revendication 3, **caractérisé par** des moyens pour recevoir les autres composants rapportés.

10. Dispositif selon la revendication 3, **caractérisé en ce que** le composant de base est doté de moyens pour recevoir des moyens d'accrochage pour accrocher le dispositif au plafond d'un local.

11. Dispositif selon la revendication 3, **caractérisé en ce que** les canaux rapportés qui sont réalisés sous forme de canal d'installation et/ou de canal d'air sortant peuvent être rapportés au composant de base.

12. Dispositif selon la revendication 3, **caractérisé par** un guidage de tracé doté de lignes de base servant à l'alimentation en fluide, lequel peut être disposé au niveau du composant de base.

13. Dispositif selon l'une quelconque des revendications précédentes, **caractérisé par** un composant rapporté dans lequel sont reçus des éléments d'éclairage.

14. Dispositif selon l'une quelconque des revendications précédentes, **caractérisé en ce qu'**il est conçu pour être disposé sur une paroi d'un local ou sur une cellule de fluide.

15. Dispositif selon l'une quelconque des revendications précédentes, **caractérisé en ce qu'**il est constitué d'au moins un élément du type canal dans lequel se trouve un guidage de tracé de conduite de fluide.

16. Dispositif selon l'une quelconque des revendications précédentes, **caractérisé en ce qu'**il est conçu pour satisfaire aux exigences d'un local de travail.

17. Dispositif selon l'une quelconque des revendications 1 à 15, **caractérisé en ce qu'**il est dimensionné de telle sorte qu'il conduit sur plusieurs locaux.
